# EUROPÄISCHE PATENTSCHRIFT

(11) **EP 2 057 480 B1**
(45) Veröffentlichungstag und Bekanntmachung des Hinweises auf die Patenterteilung: **04.06.2014**
(21) Anmeldenummer: 07817625.2
(22) Anmeldetag: 05.10.2007
(51) Int. Cl.: G01S 7/02, G01S 7/35, G01S 7/36, G01S 13/34, G01S 13/58

(54) **RADARSYSTEM ZUR UMFELDERFASSUNG MIT KOMPENSATION VON STÖRSIGNALEN**
RADAR SYSTEM FOR DETECTING SURROUNDINGS WITH COMPENSATION OF INTERFERING SIGNALS
SYSTÈME RADAR DESTINÉ AU BALAYAGE DE L'ENVIRONNEMENT AVEC COMPENSATION DE SIGNAUX PARASITES

(30) Priorität: 06.10.2006 DE 102006047759
(43) Veröffentlichungstag der Anmeldung: 13.05.2009
(73) Patentinhaber: ADC Automotive Distance Control Systems GmbH, 88131 Lindau (DE)
(72) Erfinder: WINTERMANTEL, Markus, 88131 Lindau (DE); GÖLZ, Hansjerg, 88142 Wasserburg (DE)
(74) Vertreter: Bobbert, Christiana
(86) Internationale Anmeldenummer: PCT/DE2007/001783
(87) Internationale Veröffentlichungsnummer: WO 2008/040341

(56) Entgegenhaltungen:
- WO-A-95/14939
- DE-A1- 19 935 265
- US-A1- 2002 075 178
- WOJTKIEWICZ A ET AL: "Two-dimensional signal processing in FMCW radars", PROCEEDINGS OF THE XXTH NATIONAL CONFERENCE CIRCUIT THEORY AND ELECTRONIC NETWORKS: KOLOBRZEG, POLAND, OCTOBER 21 - 24, 1997,, 21 October 1997 (1997-10-21), pages 475-480, XP009138734,

## Beschreibung

Die Erfindung betrifft ein Radarsystem zur Umfelderfassung mit Mitteln zur Kompensation von Störsignalen. Ein solches System zur Umgebungsüberwachung kann z.B. in einem Kraftfahrzeug eingesetzt werden, in dem eine Fahrerassistenz oder Sicherheitsfunktion vorgesehen ist.

Radarsysteme zur Erfassung des Umfelds eines Kraftfahrzeugs sind bekannt. Die Schriften US 2002/0075178, WO 95/14939 und DE 19935265 geben Radarsysteme zur Umfelderfassung an. Zur Ermittlung von Abstand und Relativgeschwindigkeit eines Objekts strahlen die Radarsysteme linear frequenzmodulierte Signale, sog. Frequenzrampen mit einer vorgegebenen Steigung, ab. Um die Entfernung und die Relativgeschwindigkeit im Eingangssignal trennen zu können, müssen die abgestrahlten Rampen unterschiedliche Steigungen aufweisen. Ein weiterer Typ eines Radarsystems wird von Wojtkiewicz et al. in "Two-dimensional signalprocessing in FMCW radars", (Proceedings oft he XXth National Conference Circuit Theory and Electronic Networks: Kolobrzeg, Poland, October 21-24, 1997,S. 475-480) offenbart. Hier wird eine zweidimensionale Frequenztransformation auf das Eingangssignal angewendet, um den Abstand und die Relativgeschwindigkeit eines Objekts zu bestimmen.

Bei der Umfelderfassung entsteht ein dynamisches Lagebild des Verkehrsraums welches die Entfernung und die Relativgeschwindigkeit der umgebenden Objekte zeigt. Das Lagebild kann die Eingangsinformation eines Fahrerassistenzsystems bilden, welches z. B. die Längsregelung des Fahrzeugs übernimmt oder zur Erkennung von Gefahrensituationen dient. Störeinflüsse wie interne oder äußere Störeinstrahlungen, die Strahlung von Radarsystemen anderer Fahrzeuge, Überreichweiten des Radarsensorsystems verfälschen die Messdaten von Umgebungsobjekten und führen ggf. zu einer Falschdetektion von Objekten. Dadurch wird die Funktion eines Fahrerassistenzsystems empfindlich gestört.

Es ist die Aufgabe der hier vorliegenden Erfindung eine Kompensation für Störsignale für ein Radarsystem anzugeben, bei dem aus der zweidimensionalen Frequenz von detektierter Signalleistung auf die Relativgeschwindigkeit und den radialen Abstand des zugehörigen Objekts geschlossen wird.

Das hier beanspruchte Radarsystem umfasst mehrere unabhängig voneinander kombinierbare Möglichkeiten zur Kompensation von Störsignalen. Zu den kompensierten Störsignalen zählen z.B. interne Störfrequenzen, äußere Störeinstrahlung, Überreichweiten. Für die Kompensation werden die Anfangszeitpunkte von Sende- und/ oder Empfangsintervallen gegenüber einem regelmäßigen Intervall zeitlich variiert.

Das hier beanspruchte Radarsystem zur Umfelderfassung ist mit Sendemitteln zur gerichteten Abstrahlung von Sendeleistung, Empfangsmitteln zum gerichteten Empfang von an Objekten reflektierter Sendeleistung und Signalverarbeitungsmitteln zur Prozessierung der empfangenen Leistung ausgestattet. Die Frequenz der abgestrahlten Sendeleistung ist derart moduliert, dass die Sendeleistung eine Folge linearer Frequenzrampen mit zumindest vom Betrag her gleicher Steigung beinhaltet. Zwischen den Frequenzrampen können zeitliche Lücken oder Abschnitte mit einer anderen, beliebigen Frequenzmodulation auftreten. In den Signalverarbeitungsmitteln findet eine Mischung zwischen einem Signal mit der momentanen Sendefrequenz und der von den Empfangsmitteln empfangenen, an Objekten reflektierter Sendeleistung statt. Das Ausgangssignal der Mischung wird, gegebenenfalls nach geeigneter Vorverarbeitung, während zumindest einer Frequenzrampe N mal abgetastet, wobei N die Anzahl der Abtastwerte ist.

Es wird eine zweidimensionale diskrete Zeit-Frequenz-Transformation über die jeweils N Abtastwerte von K Rampen voll oder nur teilweise bestimmt. Dabei gibt K die Anzahl der abgetasteten Frequenzrampen an. Die Auslegung des Radarsystems ist derart, dass bei der Transformation dem zweidimensionalen Frequenzbereich Relativgeschwindigkeiten und radiale Abstände zugeordnet sind, d. h., aus der zweidimensionalen Frequenz von detektierter Signalleistung wird auf die Relativgeschwindigkeit und den radialen Abstand des zugehörigen Objekts geschlossen. Zur Unterdrückung von Störeffekten wird wenigstens eine der folgenden Größen variiert: der zeitliche Abstand der Frequenzrampen bzw. zeitliche Lücke zwischen den Frequenzrampen, der Zeitraum vom Rampenstart bis zum Beginn der Abtastung der N während einer Frequenzrampe abgetasteten Werte, die Frequenz beim Rampenstart, das Vorzeichen der Steigung der Frequenzrampen.

In einer vorteilhaften Ausgestaltung der Erfindung ist die Variation der Frequenzrampeneigenschaften zufällig oder pseudo-zufällig oder determiniert. So werden auch Störungen, die durch andere Radarsysteme (z.B. an einem entgegenkommenden Fahrzeug) verursacht werden, die nach dem gleichen oder einem anderen Verfahren arbeiten, kompensiert.

In einer bevorzugten Ausgestaltung der Erfindung ist die zweidimensionale diskrete Zeit-Frequenz-Transformation eine zweidimensionale diskrete Fouriertransformation. Eine besondere Ausgestaltung des Radarsystems sieht vor, dass bei Variation einer der genannten Größen eine nichtlineare Filterung von diskreten Signalen durchgeführt wird. Durch die Variation sind nur noch einzelne Leistungswerte der Signale gestört. Diese werden durch eine Filterung mit einem nichtlinearen Filter in ihrer Wirkung reduziert oder unterdrückt.

In einer bevorzugten Ausgestaltung der Erfindung wird für die nichtlineare Filterung ein Mittelwert des Betrags oder der Leistung von vorgegebenen Signalen gebildet. Signalwerte, deren Betrag oder Leistung diesen Mittelwert um einen vorgegebenen Wert überschreiten, werden korrigiert. Die Werte werden auf einen festen Wert z. B. Null gesetzt.

In einer bevorzugten Ausgestaltung der Erfindung wird die nichtlineare Filterung jeweils auf die N Abtastwerte einer Frequenzrampe angewendet.

Eine weitere Ausgestaltung sieht vor, dass zur Signalauswertung eine zweidimensionale Zeit-Frequenz-Transformation in zwei Schritten durchgeführt wird. Im ersten Transformationsschritt wird eine eindimensionale Zeit-Frequenz-Transformation jeweils über die N Abtastwerte einer Frequenzrampe berechnet. Dieser Schritt wird für K-1 Frequenzrampen wiederholt. Die nichtlineare Filterung wird jeweils auf K Werte angewendet, welche nach der ersten diskreten Zeit-Frequenz-Transformation denselben Frequenzwert aufweisen. In einem zweiten Transformationsschritt wird eine eindimensionale diskrete Zeit-Frequenz-Transformation jeweils über die K Ausgangswerte der nichtlinearen Filterung berechnet.

In einer speziellen Ausgestaltung der Erfindung wird wenigstens eine der folgenden Größen über die Rampen variiert wird: Zeitraum der N während einer Frequenzrampe abgetasteten Werte relativ zum Rampenstart oder Frequenz beim Rampenstart oder das Vorzeichen der Steigung der Frequenzrampen. Eine zweidimensionale Zeit-Frequenz-Transformation wird in zwei Schritten durchgeführt, wobei im ersten Schritt eine eindimensionale Zeit-Frequenz-Transformation jeweils über die N Abtastwerte einer Frequenzrampe berechnet wird. Zur Kompensation der variierenden Rampeneigenschaften wird das Ergebnis der ersten diskreten Zeit-Frequenz-Transformation mit einem Faktor e^(j*a*b) multipliziert, wobei die Größe a die jeweilige Frequenz beim ersten Abtastwert einer Frequenzrampe und das Vorzeichen deren Steigung berücksichtigt und b vom Frequenzrasterwert abhängt.

Eine weitere Ausgestaltung des Radarsystems sieht vor, dass der der zeitliche Abstand der Frequenzrampen derart variiert wird, dass die Verzögerung der Rampenstartzeitpunkte zu einem zeitlich festen Raster näherungsweise eine diskrete Gleichverteilung darstellt.

Insbesondere wird die Verzögerung der Rampenstartzeitpunkte zu einem zeitlich festen Raster nur so stark variiert, dass die Differenz von einem festen Rasterpunkt zum Rampenstart und dem zugehörigen tatsächlichem Rampenstart kleiner als ein vorgegebener Schwellwert ist. Der Schwellwert wird z. B. so gewählt, dass bei der zweidimensionalen Zeit-Frequenz-Transformation der Störeffekt durch die nichtäquidistante Abtastung vernachlässigbar gering ist.

Eine bevorzugte Ausgestaltung des Radarsystems sieht vor, dass der Zeitraum der N während einer Frequenzrampe abgetasteten Werte relativ zum Rampenstart in einem - diskreten Raster variiert wird, wobei diese Rasterabstände zumindest teilweise ungleich den Abtastabständen der N Abtastwerte sind. Falschsignale verursacht durch Überreichweiten bilden sich so inkohärent aus. Insbesondere ist der Rasterabstand konstant und halb so groß wie der konstante Abtastabstand zwischen den N Abtastwerten.

Nachfolgend wird die Erfindung anhand von Zeichnungen und Ausführungsbeispielen näher erläutert.
- Fig. 1:: Blockschaltbild eines Radarsystems mit einer Kompensation von Störsignalen.
- Fig. 2:: a) Frequenz-Zeit Diagramm von Sende- und Empfangssignal
b) Zeitlicher Verlauf von Sende- und Empfangssignal
- Fig. 3:: Blockschaltbild der Signalverarbeitung mit zweidimenionaler FFT
- Fig. 4:: Signalleistung aufgetragen über die Frequenz, aufgenommen mit zeitlicher Variation der Rampenstartzeitpunkte Δt_1 bzw. der Abtastzeitpunkte Δt_2.

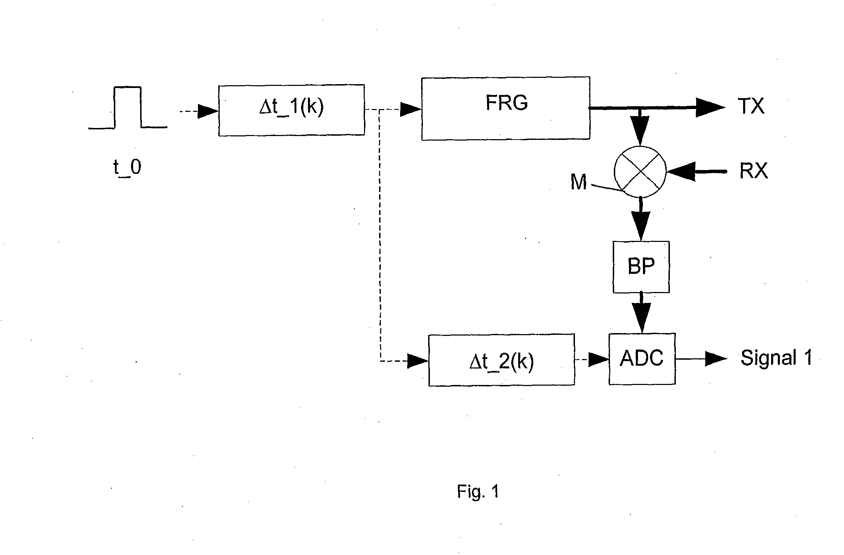

In Fig.1 wird das Blockschaltbild eines Radarsystems gezeigt. Die gestrichelten Linien geben die Triggerpfade an. Analoge-Pfade sind mit fetten Linien gekennzeichnet. Zum Zeitpunkt t_0 wird ein Startpuls für die Messung ausgegeben. Der Startpuls wird für die Aufnahme eines Datensatzes K-mal im gleichen zeitlichen Abstand wiederholt. Der zeitliche Abstand der Startpulse entspricht dem Pulswiederholintervall bei einem regulären Puls-Doppler Radar.

Die Verzögerungseinheit dt_1 verzögert das Startsignal in Abhängigkeit von k. k ist eine Laufvariable deren Wert mit jedem weiteren Startsignal um jeweils 1 bis zu einem vorgegebenen Wert K erhöht wird (k=0,1,2,3,....K). Mit dem Ausgangssignal der Verzögerungseinheit Δt_1(k) wird der Startpunkt des Sendeintervalls t_S für eine Messung k festgelegt. Eine Einheit zur Erzeugung von linear frequenzmodulierten Signalen, der Frequenz-Rampengenerator FRG, wird von dem Ausgangssignal angesteuert. Das von der Einheit ausgegebene Signal T_x wird geteilt. Ein Teil wird ggf. verstärkt und als Sendesignal über eine Antenne abgestrahlt, der zweite Teil wird einem Mischer M zugeführt. Das an Umgebungsobjekten reflektierte Empfangssignal R_x wird ggf. über dieselbe Antenne empfangen und ebenfalls dem Mischer M zugeführt. Das Ausgangssignal des Mischers M hat die Differenzfrequenz von Sendesignal T_x und Empfangssignal R_x. Die Frequenz des Ausgangssignals ist proportional zur Entfernung des erfassten Objekts. Das Ausgangssignal des Mischers wird in einem Bandpassfilter gefiltert. Das gefilterte Signal wird mit einem Analog-Digital-Wandler ADC digitalisiert und dazu N-mal pro Frequenzrampe innehalb eines Empfangsintervalls t_E abgetastet. Das Ausgangssignal Signal 1 setzt sich aus N Abtastwerten pro Rampe mit K Wiederholungen (Anzahl der angetasteten Rampen) zusammen. Der Start des Empfangsintervalls t_E bezogen auf den Startpunkt des Sendeinteivalls t_S wird von der Verzögerungseinheit Δt_2(k) für eine Messung k bestimmt.

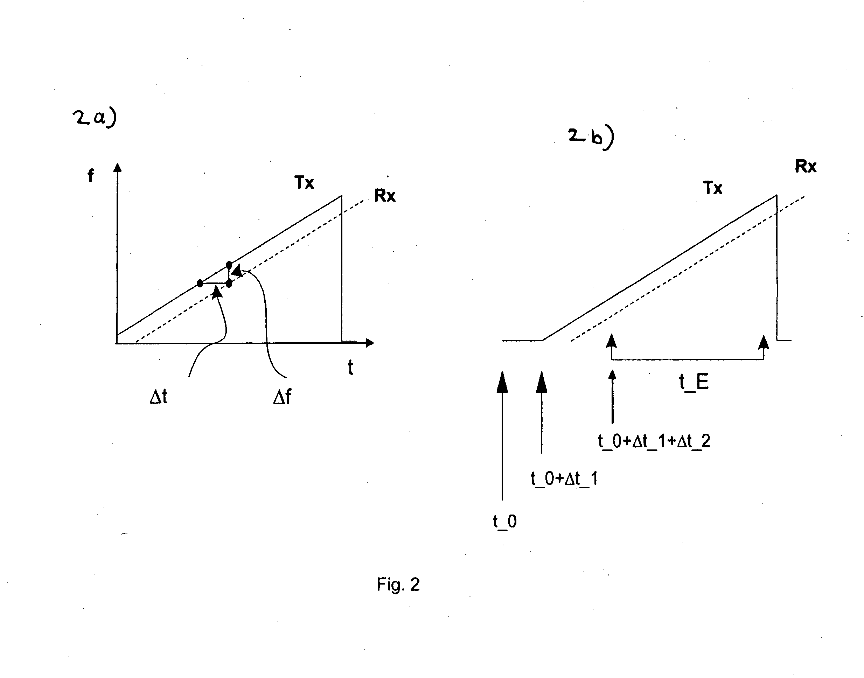

In Fig.2a ist die Frequenz für eine Senderampe Tx und ein zugehöriges Empfangssignal Rx über der Zeit aufgetragen. Durch den zeitlichen Versatz Δt des Empfangssignals Rx, verursacht durch die Flugzeit der Radarstrahlung zum Objekt und zurück, ergibt sich eine Frequenzverschiebung Δf des Empfangssignals Rx zum Sendesignal Tx. Die Frequenzverschiebung Δf ist proportional zur Entfernung des Objekts. In Fig. 2b ist die Frequenz von Sendesignal Tx und Empfangssignal Rx über der Zeit aufgetragen. Das gemischte Empfangssignal wird nur in einem beschränkten Empfangsintervall abgetastet. Die Signalenergie bei einer vorgegebenen Frequenz - die Entfernung eines Objekts ist proportional zu Df - ist im gesamten Mischbereich Tx-Rx enthalten, daher kann die Lage des Empfangsintervalls t_E in diesem Bereich variiert werden. Zusätzlich sind in Fig. 2b die Verzögerungszeiten Δt_1(k) und Δt_2(k) dargestellt. Durch die Verzögerung Δt_1(k) werden Sende- und Empfangsintervalle gleichermaßen verschoben ("verjittert"). Dabei wird der Signalpegel von fixen Störfrequenzen (z.B. internen Störfrequenzen) vermindert, da diese in jedem der *K* Rampenintervalle mit einer anderen Phasenlage erfasst werden. Der Wertebereich der Verzögerung Δt_1(k) wird so klein gewählt, dass der Pegel des Nutzsignals nur geringfügig verringert wird. Durch die zusätzliche Verzögerung Δt_2(k) werden Sende- und Empfangsintervalle gegeneinander verschoben. Dabei wird der Signalpegel von externen Störquellen sowie der Signalpegel aus Überreichweitenempfang vermindert.

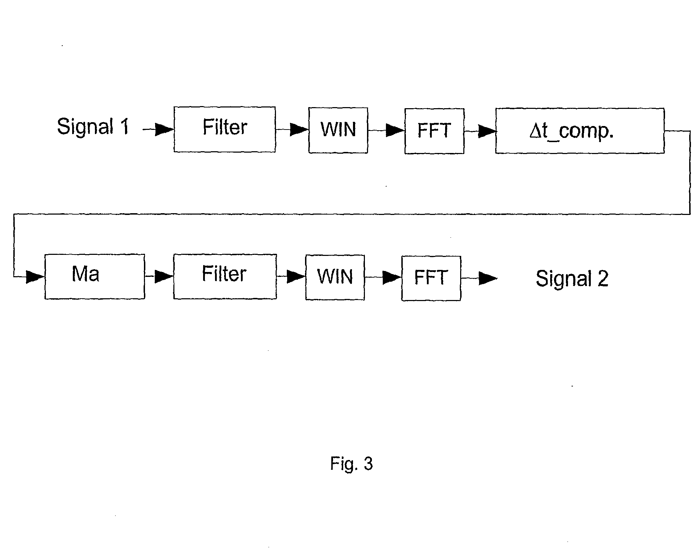

Fig.3 zeigt die digitale Signalverarbeitung der Abtastwerte bis hin zu den Dopplerspektren. Signal 1, bestehend aus N Werten, aufgenommen mit K Wiederholungen, wird in die Signalverarbeitungseinheit eingespeist. Eine zweidimensionale FFT wird durch aufeinander folgende FFTs von Zeilen und Spalten einer Matrix realisiert. Ein Zwischenspeicher Ma für die Matrixwerte ist zwischen der ersten und der zweiten FFT angeordnet. Vor der ersten und der zweiten FFT findet eine Fensterung des Datensignals statt. Dies wird in Fig. 3 durch die Blöcke WIN dargestellt. Um den Einfluss von externen Störquellen weitestgehend zu minimieren sind vor der ersten und der zweiten FFT nichtlineare Filter vorgesehen.
Während der Filterung werden solche Abtastwerte, deren Betrag über einem Schwellwert liegt durch einen festen Wert, z. B. Null ersetzt. Der Schwellwert hängt von den Betrags- bzw. Leistungswerten der abgetasteten Werte ab.
Die Verzögerung Δt_2(k) hat einen nicht zu vernachlässigenden Einfluss auf die Phase des Signals nach der ersten FFT. Die frequenzabhängige Phasendrehung wird durch den Kompensator Δt_comp in Abhängigkeit vom Wert Δt_2(k) kompensiert. Am Ende der Signalverarbeitung erhält man das Dopplersignal Signal 2, das sich aus K Werten mit N Wiederholungen zusammensetzt.

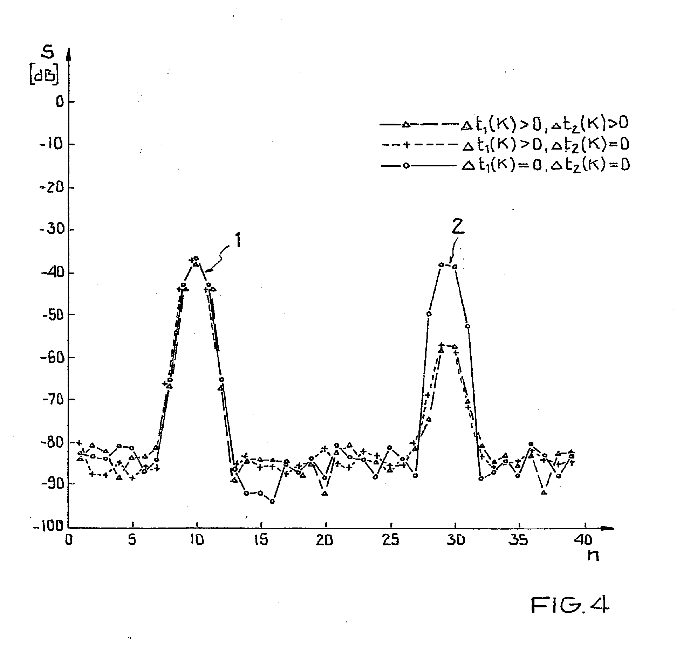

In Fig.4 ist die Simulation des Signalpegels nach der ersten FFT für über die Entfernungstore n, mit n=1..39 aufgetragen. Die Entfernungstore ergeben sich durch die digitale Abtastung. Beim Entfernungstor 10 ist ein Ziel 1 und beim Entfernungstor 30 eine Störlinie 2 mit fester Frequenz und gleichem Signalpegel dargestellt. Die Simulation wurde für verschiedene Verzögerungen für Sende- und Empfangsintervall durchgeführt. Die durchgezogene Linie zeigt den Signalpegel, wenn keine Variation der Sende- und Empfangsintervalle Δt_1=0 und Δt_2=0 vorgesehen ist. Es wird etwa der gleiche Signalpegel für beide Leistungsspitzen erreicht. Werden Sende- und Empfangsintervalle gleichermaßen durch eine Variation von Δt_1 *(k)* verschoben fällt der Signalpegel der Störlinie um ca. 18 dB, wie in Fig.4 mit der fein gestrichelten Linie dargestellt.
Werden zusätzlich Sende- und Empfangsintervalle durch eine Variation von Δt_2 *(k)* gegeneinander verschoben fällt der Signalpegel der Störlinie im Beispiel ebenfalls auf einen Wert der ca. 18 dB unter dem Ausgangsniveau liegt (Fig.4, grob gestrichelte Linie).
Der Signalpegel des Zielobjekts 1 beim Entfernungstor 10 bleibt bei der Variation von Δt_1 und Δt_2 erhalten.

## Patentansprüche

1. Radarsystem zur Umfelderfassung mit
• Sendemitteln zur gerichteten Abstrahlung von Sendeleistung,
• Empfangsmitteln zum gerichteten Empfang von an Objekten reflektierter Sendeleistung und
• Signalverarbeitungsmitteln zur Prozessierung der empfangenen Leistung, wobei
a) die Frequenz der abgestrahlten Sendeleistung derart moduliert ist, dass die Sendeleistung eine Folge linearer Frequenzrampen mit zumindest vom Betrag her gleicher Steigung beinhaltet,
b) zwischen den Frequenzrampen zeitliche Lücken oder Abschnitte mit anderer Frequenzmodulation auftreten können,
c) in den Signalverarbeitungsmitteln eine Mischung zwischen einem Signal mit der momentanen Sendefrequenz und der von den Empfangsmitteln empfangenen, an Objekten reflektierten Sendeleistung statt findet,
d) in den Signalverarbeitungsmitteln das Ausgangssignal der Mischung, gegebenenfalls nach geeigneter Vorverarbeitung, während zumindest einer Frequenzrampe N mal abgetastet wird,
e) in den Signalverarbeitungsmitteln eine zweidimensionale diskrete Zeit-Frequenz-Transformation über die jeweils N Abtastwerte von K Rampen, voll oder nur teilweise bestimmt wird, wobei K die Anzahl der abgetasteten Frequenzrampen angibt,
f) und die Auslegung derart ist, dass bei der Transformation dem zweidimensionalen Frequenzbereich Relativgeschwindigkeiten und radiale Abstände zugeordnet sind, d. h., aus der zweidimensionalen Frequenz von detektierter Signalleistung wird auf die Relativgeschwindigkeit und den radialen Abstand des zugehörigen Objekts geschlossen,
**dadurch gekennzeichnet, dass**
zur Unterdrückung von Störeffekten wenigstens eine der folgenden Größen über die
Rampen variiert wird:
• zeitlicher Abstand der Frequenzrampen d.h. zeitliche Lücke zwischen den Frequenzrampen,
wobei die Verzögerung der Rampenstartzeitpunkte zu einem zeitlich festen Raster nur so stark variiert, dass die Differenz von einem festen Rasterpunkt zum Rampenstart und dem zugehörigen tatsächlichen Rampenstart kleiner als ein vorgegebener Schwellwert ist.
• Zeitraum vom Rampenstart bis zum Beginn der Abtastung der N während einer Frequenzrampe abgetasteten Werte
• Frequenz beim Rampenstart,
• Vorzeichen der Steigung der Frequenzrampen,
wobei bei den drei letztgenannten die zweidimensionale diskrete Zeit-Frequenz-Transformation in zwei Schritten durchgeführt wird, wobei im ersten Schritt eine eindimensionale diskrete Zeit-Frequenz-Transformation jeweils über die N Abtastwerte einer Frequenzrampe berechnet wird,
und zur Kompensation der variierenden Rampeneigenschaften das Ergebnis der ersten diskreten Zeit-Frequenz-Transformation mit einem Faktor e^(j*a*b) multipliziert wird, wobei die Größe a die jeweilige Frequenz beim ersten Abtastwert einer Frequenzrampe und das Vorzeichen deren Steigung berücksichtigt und b vom Frequenzrasterwert abhängt.

2. Radarsystem nach Anspruch 1, **dadurch gekennzeichnet, dass** die Variation der Frequenzrampeneigenschaften zufällig oder pseudo-zufällig oder determiniert ist.

3. Radarsystem nach einem der obigen Ansprüche, **dadurch gekennzeichnet, dass** bei Variation zumindest einer der Frequenzrampeneigenschaften eine nichtlineare Filterung von diskreten Signalen durchgerührt wird.

4. Radarsystem nach Anspruch 3, **dadurch gekennzeichnet, dass** bei der nichtlinearen Filterung ein Mittelwert für den Betrag oder die Leistung aus einer Mehrzahl von vorgegebenen Signalwerten gebildet wird, und alle Werte, deren Betrag oder Leistung diesen Mittelwert um einen vorgegebenen Wert überschreiten, korrigiert werden

5. Radarsystem nach Anspruch 3 oder 4, bei welchem die nichtlineare Filterung jeweils auf die N Abtastwerte einer Frequenzrampe angewendet wird.

6. Radarsystem nach Anspruch 3 oder 4, bei welchem
• die zweidimensionale Zeit-Frequenz-Transformation in zwei Schritten durchgeführt wird,
• im ersten Transformationsschritt eine eindimensionale diskrete Zeit-Frequenz-Transformation jeweils über die N Abtastwerte einer Frequenzrampe berechnet wird, wobei dieser Schritt für K Frequenzrampen durchgeführt wird
• die nichtlineare Filterung jeweils auf K Werte angewendet wird, welche nach der ersten diskreten Zeit-Frequenz-Transformation denselben Frequenzwert aufweisen
• und im zweiten Transformationsschritt eine eindimensionale Zeit-Frequenz-Transformation jeweils über die K Ausgangswerte der nichtlinearen Filterung berechnet wird.

7. Radarsystem nach einem der obigen Ansprüche, bei welchem der zeitliche Abstand der Frequenzrampen so über die Rampen variiert wird, dass die Verzögerung der Rampenstartzeitpunkte zu einem zeitlich festen Raster näherungsweise eine diskrete Gleichverteilung darstellt.

8. Radarsystem nach einem der obigen Ansprüche, bei welchem der Zeitraum der N während einer Frequenzrampe abgetasteten Werte relativ zum Rampenstart in einem diskreten Raster variiert wird, wobei die Rasterabstände zumindest teilweise ungleich den Abtastabständen der N Abtastwerte sind.

9. Radarsystem nach Anspruch 10, bei welchem der Zeitraum der N während einer Frequenzrampe abgetasteten Werte relativ zum Rampenstart in einem diskreten Raster variiert wird, wobei der Rasterabstand konstant und halb so groß wie der konstante Abtastabstand zwischen den N Abtastwerten ist.

10. Fahrerassistenzsystem, welches ein Radarsystem nach einem der obigen Ansprüche beinhaltet.

## Claims

1. A radar system for covering the surroundings having
• transmitting means for the directed radiation of transmitting power,
• receiving means for the directed reception of transmitting power reflected from objects, and
• signal processing means for processing the received power,
wherein
a) the frequency of the radiated transmitting power is modulated such that the transmitting power includes a sequence of linear frequency ramps that are identical in slope at least with respect to the amount;
b) time gaps or segments with a different frequency modulation may occur between the frequency ramps;
c) in the signal processing means, a signal having the instantaneous transmitting frequency is mixed with the transmitting power that is reflected from objects and received by the receiving means;
d) in the signal processing means, the output signal of the mixing is sampled, after suitable pre-processing where appropriate, N times during at least one frequency ramp;
e) in the signal processing means, a two-dimensional discrete time-frequency transform is fully or only partially determined over the N sampled values at a time of K ramps, wherein K indicates the number of the sampled frequency ramps;
f) and the design is such that relative velocities and radial distances are assigned to the two-dimensional frequency domain in the transform, i.e., the relative velocity and the radial distance of the associated object are inferred from the two-dimensional frequency of the detected signal power,
**characterized in that**
at least one of the following quantities is varied over the ramps in order to suppress interference effects:
• time interval between the frequency ramps, i.e., the time gap between the frequency ramps,
wherein the delay of the ramp start instants with respect to a fixed-in-time grid varies only to such an extent that the difference between a fixed grid point and the ramp start and the associated actual ramp start is smaller than a predetermined threshold value;
• period of time from the ramp start to the start of the sampling of the N values that are sampled during a frequency ramp;
• frequency at ramp start;
• sign of the slope of the frequency ramps,
wherein, with the three last-mentioned ones, the two-dimensional discrete time-frequency transform is performed in two steps, wherein, in the first step, a one-dimensional time-frequency transform is calculated over the N sampled values of a frequency ramp in each case,
and the result of the first discrete time-frequency transform is multiplied by a factor e^(j*a*b) in order to compensate for the varying ramp properties, wherein quantity a takes the respective frequency at the first sampled value of a frequency ramp and the sign of the slope thereof into consideration and b depends on the frequency grid value.

2. The radar system according to claim 1, **characterized in that** the variation of the frequency ramp properties is a random variation or a pseudo-random variation or a determinate variation.

3. The radar system according to any one of the preceding claims, **characterized in that** a nonlinear filtering of discrete signals is performed when varying at least one of the frequency ramp properties.

4. The radar system according to claim 3, **characterized in that** during the nonlinear filtering, a mean value for the amount or the power is formed from a plurality of predetermined signal values, and all values whose amount or power exceeds said mean value by a predetermined value are corrected.

5. The radar system according to claim 3 or 4, in which the nonlinear filtering is applied to the N sampled values of a frequency ramp in each case.

6. The radar system according to claim 3 or 4, in which
• the two-dimensional time-frequency transform is performed in two steps;
• in the first transform step, a one-dimensional discrete time-frequency transform is calculated over the N sampled values of a frequency ramp in each case, wherein this step is performed for K frequency ramps;
• in each case, the nonlinear filtering is applied to K values that have the same frequency value after the first discrete time-frequency transform;
• and in the second transform step, a one-dimensional time-frequency transform is calculated over the K initial values of the nonlinear filtering in each case.

7. The radar system according to any one of the preceding claims, in which the time interval between the frequency ramps is varied over the ramps such that the delay of the ramp start instants with respect to a fixed-in-time grid approximately represents a discrete uniform distribution.

8. The radar system according to any one of the preceding claims, in which the period of the N values that are sampled during a frequency ramp relative to the ramp start in a discrete grid is varied, wherein the grid element spacings are at least partially unequal to the sampling intervals of the N sampled values.

9. The radar system according to claim 10, in which the period of the N values that are sampled during a frequency ramp relative to the ramp start in a discrete grid is varied, wherein the grid element spacing is constant and half as big as the constant sampling interval between the N sampled values.

10. A driver assistance system that includes a radar system according to any one of the preceding claims.

## Revendications

1. Système radar destiné à la détection de l'environnement, avec
• des moyens d'émission pour la radiation dirigée d'une puissance d'émission,
• des moyens de réception pour la réception dirigée d'une puissance d'émission réfléchie sur des objets et
• des moyens de traitement des signaux pour traiter la puissance reçue
a) la fréquence de la puissance d'émission rayonnée étant modulée de telle sorte que la puissance d'émission contient une suite de rampes de fréquence linéaires avec une pente identique du moins quant à son montant,
b) des lacunes ou segments temporels avec une autre modulation de fréquence pouvant apparaître entre les rampes de fréquence,
c) un mixage survenant dans les moyens de traitement des signaux entre un signal ayant la fréquence d'émission momentanée et la puissance d'émission réfléchie sur les objets et reçue par les moyens de réception,
d) le signal de sortie du mixage étant, dans les moyens de traitement des signaux, exploré N fois pendant au moins une rampe de fréquence, éventuellement après un traitement approprié,
e) une transformation temps-fréquence discrète à deux dimensions étant, dans les moyens de traitement des signaux, définie, de façon totale ou seulement partielle, sur les N valeurs d'exploration respectives de K rampes, K indiquant le nombre de rampes de fréquence explorées,
f) et la conception étant telle que, lors de la transformation, des vitesses relatives et des distances radiales sont affectées à la plage de fréquence à deux dimensions, ce qui signifie que, à partir de la fréquence à deux dimensions de la puissance de signaux détectée, il est tiré des conclusions sur la vitesse relative et la distance radiale de l'objet correspondant,
**caractérisé en ce que**
pour empêcher des effets parasites, au moins une des grandeurs suivantes est modifiée sur les rampes :
• écart temporel des rampes de fréquence, c'est-à-dire lacune temporelle entre les rampes de fréquence, la temporisation des moments de départ de rampes n'étant modifiée pour une trame temporellement fixe que dans la mesure où la différence d'un point de trame fixe pour le départ de rampe et le départ de rampe effectif correspondant est plus petite qu'une valeur de seuil prédéfinie.
• laps de temps entre le départ de rampe et le début de l'exploration des N valeurs explorées pendant une rampe de fréquence
• fréquence au départ de rampe,
• signe de la pente des rampes de fréquence,
la transformation temps-fréquence discrète à deux dimensions étant, pour les trois derniers, effectuée en deux étapes, une transformation temps-fréquence discrète à une dimension étant calculée dans la première étape respectivement sur les N valeurs d'exploration d'une rampe de fréquence,
et, pour la compensation des caractéristiques de rampe qui varient, le résultat de la première transformation temps-fréquence discrète est multiplié par un facteur e^(j*a*b), la grandeur a prenant en considération la fréquence respective pour la première valeur d'exploration d'une rampe de fréquence et le signe de sa pente, et b dépendant de la valeur de trame de fréquence.

2. Système radar selon la revendication 1, **caractérisé en ce que** la variation des caractéristiques de rampe de fréquence est aléatoire ou pseudo-aléatoire ou déterminée.

3. Système radar selon une des revendications ci-dessus, **caractérisé en ce que**, lors de la variation d'au moins une des caractéristiques de rampe de fréquence, il est effectué un filtrage non linéaire de signaux discrets.

4. Système radar selon la revendication 3, **caractérisé en ce que**, lors du filtrage non linéaire, une valeur moyenne est formée pour le montant ou la puissance à partir d'une pluralité de valeurs signaux prédéfinies, et toutes les valeurs dont le montant ou la puissance dépasse cette valeur moyenne d'une valeur prédéfinie sont corrigées.

5. Système radar selon la revendication 3 ou 4, dans lequel le filtrage non linéaire est appliqué respectivement aux N valeurs d'exploration d'une rampe de fréquence.

6. Système radar selon la revendication 3 ou 4, **caractérisé en ce que**
• la transformation temps-fréquence à deux dimensions est effectuée en deux étapes,
• dans la première étape de transformation, une transformation temps-fréquence discrète à une dimension est calculée respectivement sur les N valeurs d'exploration d'une rampe de fréquence, cette étape étant effectuée pour K rampes de fréquence
• le filtrage non linéaire est appliqué respectivement à K valeurs qui présentent, après la première transformation temps-fréquence discrète, la même valeur de fréquence
• et, dans la deuxième étape de transformation, une transformation temps-fréquence à une dimension est calculée respectivement sur les K valeurs de sortie du filtrage non linéaire.

7. Système radar selon une des revendications ci-dessus, dans lequel l'écart temporel des rampes de fréquence est modifié sur les rampes de telle sorte que la temporisation des moments de départ de rampes pour une trame fixe temporellement représente approximativement une équipartition discrète.

8. Système radar selon une des revendications ci-dessus, dans lequel le laps de temps de N valeurs explorées pendant une rampe de fréquence est modifié par rapport au départ de rampe dans une trame discrète, les écarts de trame étant au moins partiellement différents des écarts d'exploration des N valeurs d'exploration.

9. Système radar selon la revendication 10, dans lequel le laps de temps de N valeurs explorées pendant une rampe de fréquence est modifié par rapport au départ de rampe dans une trame discrète, l'écart de trame étant constant et deux fois moins important que l'écart d'exploration constant entre les N valeurs d'exploration.

10. Système d'assistance au conducteur qui contient le système radar selon une des revendications ci-dessus.
